# FASCICULE DE BREVET EUROPEEN

(11) **EP 3 083 194 B1**
(45) Date de publication et mention de la délivrance du brevet: **27.11.2019**
(21) Numéro de dépôt: 14812446.4
(22) Date de dépôt: 10.12.2014
(51) Int. Cl.: B29C 63/10, F16L 55/168

(54) **DISPOSITIF DE TRAITEMENT D'UN CORPS LONGILIGNE**
VORRICHTUNG ZUR VERARBEITUNG EINES LANGGESTRECKTEN KÖRPERS
DEVICE FOR PROCESSING AN ELONGATE BODY

(30) Priorité: 10.12.2013 FR 1362380
(43) Date de publication de la demande: 26.10.2016
(73) Titulaire: 3X Engineering, 98000 Monaco (MC); Total SA, 92400 Courbevoie (FR)
(72) Inventeur: BOULET D'AURIA, Stanislas, F-06230 Villefranche sur Mer (FR); SLIMANI, Hacen, F-06000 Nice (FR); WIET, Paul, F-78150 Le Chesnay (FR)
(74) Mandataire: Lavoix
(86) Numéro de dépôt international: PCT/EP2014/077259
(87) Numéro de publication internationale: WO 2015/086695

(56) Documents cités:
- EP-A2- 1 016 514
- WO-A1-2012/010828
- FR-A1- 2 666 864

## Description

### Domaine de l'invention

La présente invention concerne un dispositif de traitement d'un corps longiligne. Plus particulièrement, la présente invention concerne la réparation ou le renforcement local de canalisations de transport d'eau, de gaz, de pétrole et d'autres fluides, notamment sous-marines.

### Etat de l'art

Les canalisations sous-marines ou terrestres destinées au transport de fluides (telles que les aqueducs pour l'eau et les oléoducs pour le pétrole) ou de gaz subissent des agressions thermiques, physiques ou chimiques qui occasionnent des dommages. La réparation de ces dommages est coûteuse. Ces canalisations sont généralement de section sensiblement circulaire.

La réparation d'une telle canalisation peut se faire par différentes techniques telles que la soudure ou la fixation d'une manchette et/ou le remplacement total d'un segment. L'inconvénient majeur du remplacement d'un tronçon de canalisation est qu'elles sont contraignantes à employer car elles nécessitent l'arrêt du flux de l'effluent interne tel que liquide, gaz ou autres mélanges, dans la portion de canalisation à réparer. Les techniques de réhabilitation par l'extérieur des canalisations permettent d'éviter le remplacement du tronçon de canalisation.

On connaît le document FR 2 666 864 et le document EP 0 548 231, qui décrivent un système de déroulage sur une canalisation d'une bande composée de fibres noyées dans du thermoplastique que l'on fait fondre avant la pose de la bande sur la canalisation. Une telle bande ne peut assurer une bonne étanchéité du fait même de la plasticité de sa matière. De plus, en milieu sous-marin, le chauffage de la bande est particulièrement délicat et irrégulier. Les défauts d'homogénéité de l'élasticité ainsi obtenue augmentent la fragilité de la réparation. L'élasticité de la bande thermoplastique limite l'utilisation de ce système pour la réparation de canalisations sous pression. Enfin, ce document présente l'assemblage de spires successives jointives, qui présentent nécessairement une faiblesse d'étanchéité à leur frontière.

Ces documents présentent, en ce qui concerne le montage sur la canalisation, un système formé d'une première partie en forme de fer à cheval qui est posé sur la canalisation et qui porte au moins trois moteurs pour mettre en rotation par rapport à l'axe de la canalisation, en son intérieur, une deuxième partie circulaire jusqu'à ce qu'elle revienne toucher la première partie en ayant contourné la canalisation. Ce système complexe présente des problèmes de superposition ou d'écartement de bande si son centrage est imparfait. Il est, de plus, particulièrement délicat et complexe à mettre en oeuvre et sujet à des vibrations du fait du faible ancrage des deux parties entre elles. Enfin, ce système n'est pas compatible avec les parties des canalisations sous-marines communément appelées « riser », obliques, et « splash zone ». Le document EP1016514 divulgue un système similaire.

### Exposé de l'invention

Un but de l'invention est de fournir un dispositif de réparation ou le renforcement local d'un corps longiligne, fiable, rapide, facile à mettre en oeuvre et permettant l'enroulement d'une bande, par exemple pré-imprégnée polymérisable, autour de la zone à réparer.

Un autre but de l'invention est de fournir un dispositif de réparation ou de renforcement local d'un corps longiligne capable de s'adapter à différents diamètres et à différentes formes dudit corps longiligne.

À cet effet, selon un premier aspect, la présente invention vise un dispositif de réparation ou de renforcement local d'un corps longiligne présentant une altération de son intégrité, ledit dispositif étant destiné à l'enroulement autour du corps longiligne d'une ou plusieurs couches de bande, ledit dispositif comprenant :
- deux demi couronnes présentant, chacune, deux extrémités configurées pour venir en contact entre elles,
- des moyens pour déplacer, l'une par rapport à l'autre, les deux demi couronnes jusqu'à ce qu'elles entourent, sans se toucher, le corps longiligne et
- des moyens pour déplacer en translation selon un axe perpendiculaire à l'axe du corps longiligne, l'une par rapport à l'autre, les deux demi couronnes jusqu'à ce que leurs extrémités se touchent pour former une couronne entourant le corps longiligne, le dispositif comportant en outre, un moyen de blocage préliminaire comportant :
   - une mâchoire fixe munie d'au moins deux patins formant, entre eux, un angle obtus,
   - un support de mâchoire amovible comportant au moins un guide pour la mâchoire amovible, chaque dit guide guidant un déplacement de la mâchoire amovible parallèlement à la mâchoire fixe,
   - la mâchoire amovible et
   - un moyen de déplacement de la mâchoire amovible supportée par un guide du support vers la mâchoire fixe.

Du fait que le dernier mouvement entre les demi couronnes est un mouvement de translation, le positionnement respectif des extrémités des demi couronnes pour former la couronne peut être plus précis. De plus, on évite un frottement sur le corps longiligne, frottement qui aurait pu être néfaste à son état de surface, voire lui appliquer des efforts de torsion entre ses deux demi circonférences prises entre des demi couronnes si elles avaient effectuer, entre elles, un mouvement de rotation. Ces efforts de torsion auraient, en effet, pu provoquer des déformations temporaires nuisibles à la réparation à appliquer, voire provoquer des crevasses, des points de faiblesse ou des déchirures de la paroi du corps longiligne ou de la bande une fois posée et, éventuellement, polymérisée. L'opérateur peut, d'abord, solidariser fermement et rapidement le dispositif au corps longiligne, avec les mâchoires.

Dans des modes de réalisation, le dispositif comporte, sur au moins une des demi couronnes, au moins un pion de centrage correspondant, dans l'autre demi couronne, à une ouverture de forme complémentaire à la forme dudit pion de centrage.

Grâce à ces dispositions, le centrage des demi couronnes entre elles est particulièrement précis.

Dans des modes de réalisation, le support de mâchoire amovible comporte une pluralité de guides pour la mâchoire amovible, lesdits guides étant à différentes distances de la mâchoire fixe.

Grâce à ces dispositions, les mâchoires sont compatibles avec une large gamme de diamètres de corps longilignes. De plus, le positionnement de la mâchoire amovible est rapide, par simple guidage, ce premier positionnement interdisant que le corps longiligne ne ressorte des mâchoires. Puis, le déplacement des mâchoires, l'une par rapport à l'autre, jusqu'à ce que le corps longiligne soit pincé entre elles, interdit la rotation du dispositif par rapport au corps longiligne.

Dans des modes de réalisation, le dispositif comporte :
- un moyen d'entraînement en rotation d'une bobine de bande pré-imprégnée polymérisable autour du corps longiligne,
- un moyen d'entraînement en translation de la bobine parallèlement à l'axe du corps longiligne et
- un moyen de liaison entre les moyens d'entraînement configuré pour faire parcourir à l'outil une hélice en regard de la surface externe du corps longiligne.

Grâce à ces dispositions, la bobine est entraînée régulièrement en regard de la surface externe du corps longiligne et en parcourt toute la surface, sur au moins un segment du corps longiligne. Le traitement de ce segment du corps longiligne peut ainsi être complet.

Dans des modes de réalisation, le moyen de liaison comporte :
- deux demi roues dentées fixes par rapport aux demi couronnes sur laquelle s'engrène une roue dentée mobile solidaire d'une vis sans fin, l'axe de la roue dentée mobile étant entraîné en rotation autour du corps longiligne par le moyen d'entraînement en rotation et
- un support de la bobine déplacé parallèlement à l'axe du corps longiligne par la rotation de la vis sans fin.

Grâce à ces dispositions, la mise en oeuvre de la présente invention est particulièrement simple et précise.

Dans des modes de réalisation, le moyen d'entraînement en rotation est manuel.

Grâce à ces dispositions, l'opérateur peut choisir la vitesse de déplacement de l'outil en regard de la surface externe du corps longiligne le long du parcours hélicoïdal, ou remplacer la bobine de matériau pré imprégné polymérisable. De plus, on évite ainsi de prévoir un moteur, ce qui simplifie le dispositif et améliore son autonomie et sa fiabilité.

Dans des modes de réalisation, le moyen de liaison comporte un moyen d'inversion de sens de translation actionné lors de l'arrivée de la bobine en fin de course longitudinale.

Grâce à ces dispositions, on peut réaliser plusieurs passages successifs de la bobine en regard de chaque élément de surface du corps longiligne, en suivant successivement, une ou plusieurs fois, deux hélices de pas opposés.

Dans des modes de réalisation, le moyen d'inversion comporte un double pignon conique, dont une roue dentée, dite d'entrée, est libre en translation pour s'égrener alternativement sur l'une ou l'autre des autres roues dentées, la translation de la roue dentée d'entrée étant provoqué par une butée de fin de course longitudinale.

Grâce à ces dispositions, l'inversion de sens se fait sans intervention humaine, dès que l'outil parvient en fin de course.

Dans des modes de réalisation, la bobine est libre en rotation par rapport à un axe perpendiculaire à la bande de matériau et à l'axe du corps longiligne.

Grâce à ces dispositions, la bobine est automatiquement orientée pour que son plan comporte la bande en cours de pose.

Dans des modes de réalisation, le dispositif comporte un moyen de détection de fin de bande sur la bobine.

Grâce à ces dispositions, même si la bobine n'est pas dans le champ de vision de l'opérateur, celui-ci est averti de la survenance de la fin de bande sur la bobine et peut la remplacer, voire lier la bande d'une nouvelle bobine à la bande qui était en cours de délivrance.

Dans des modes de réalisation, le dispositif comporte un contrepoids configuré pour que le centre de gravité du dispositif soit sensiblement sur l'axe du corps longiligne.

Grâce à ces dispositions, on évite des efforts de l'opérateur pour lutter contre le poids des parties mobiles du dispositif.

Dans des modes de réalisation, le dispositif comporte au moins un flotteur de densité inférieure à la densité de l'eau.

### Présentation des figures

D'autres avantages, buts et caractéristiques de la présente invention ressortiront de la description qui va suivre, faite dans un but explicatif et nullement limitatif en regard des dessins annexés, dans lesquels :
- la figure 1 représente un schéma bloc d'un mode de réalisation particulier du dispositif objet de la présente invention,
- les figures 2 à 4 représentent, schématiquement et en vue de face, trois étapes de mise en position du dispositif sur un corps longiligne,
- la figure 5 représente, schématiquement et en vue de face, un moyen de blocage de modes de réalisation du dispositif objet de la présente invention,
- la figure 6 représente, schématiquement et en vue de face, un moyen particulier de mise en translation d'un outil sur un support en rotation,
- la figure 7 représente, schématiquement, un moyen d'inversion de sens de translation de modes de réalisation du dispositif objet de la présente invention,
- la figure 8 représente, schématiquement, un mode de réalisation particulier du dispositif objet de la présente invention adapté à la pose d'une bande,
- la figure 9 et 10 représentent, schématiquement, une vue en perspective, respectivement avant et après fixation sur un corps longiligne, d'un mode de réalisation particulier du dispositif objet de l'invention,
- la figure 11 représente, schématiquement, une vue en perspective partielle d'une variante du premier mode de réalisation du dispositif illustré en figures 9 et 10,
- la figure 12 représente, schématiquement, un moyen particulier de détection de fin de bande sur une bobine,
- la figure 13 représente, schématiquement, une vue en perspective d'un deuxième mode de réalisation particulier du dispositif objet de l'invention et
- la figure 14 représente, schématiquement, une vue en perspective d'un troisième mode de réalisation du dispositif objet de l'invention.

### Description détaillée de l'invention

Par « corps longiligne» on entend, dans toute la description, un objet sensiblement plus long que large tel que les canalisations pour le passage d'un fluide mais également les piliers. Le corps longiligne peut être de section symétrique ou non symétrique, cylindrique, de forme ronde ou carrée par exemple. Le corps longiligne est aussi appelé canalisation dans la suite de la description.

On définit, pour la suite de la description, un axe longitudinal X, parallèle à l'axe principal local du corps longiligne à traiter.

Par « mâchoire » on entend une pièce de forme adaptée à venir se fixer sur le corps longiligne à une deuxième pièce.

On note, dès à présent, que les figures ne sont pas à l'échelle.

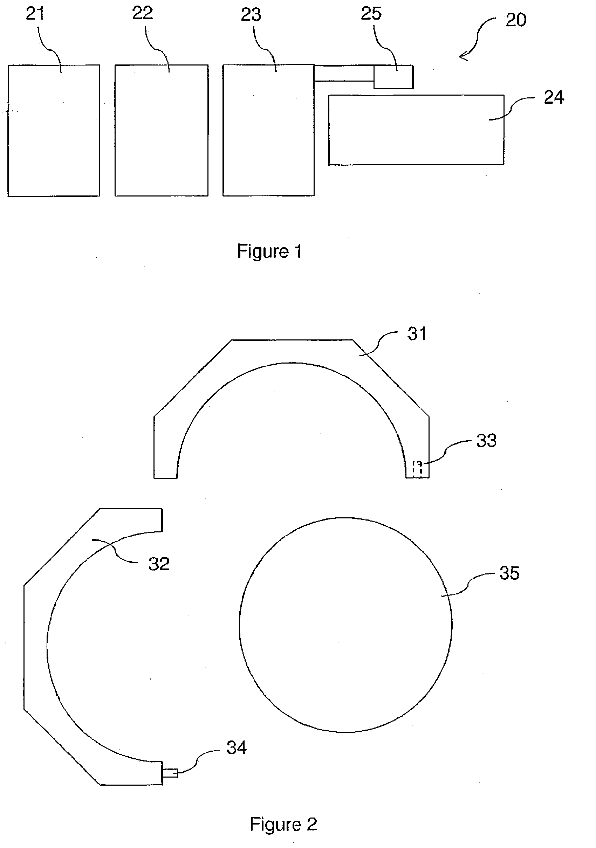

On observe, en figure 1, les blocs fonctionnels d'un mode de réalisation particulier 20 du dispositif objet de la présente invention :
- un moyen 21 de blocage du dispositif sur la canalisation,
- un moyen 22 de positionnement,
- un moyen 23 de guidage d'outil,
- un outil 25 déplacé, par le moyen de guidage, en rotation autour d'un corps longiligne 24 et/ou en translation le long du corps longiligne 24.

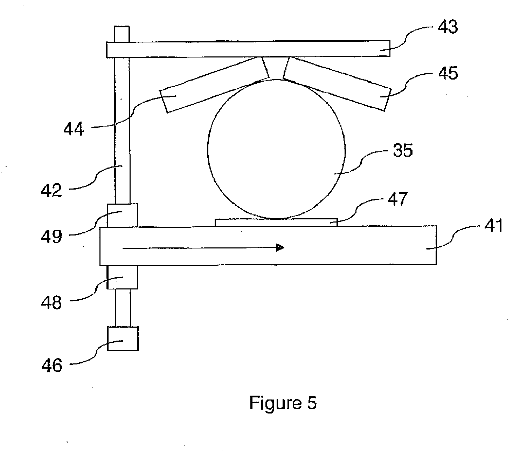

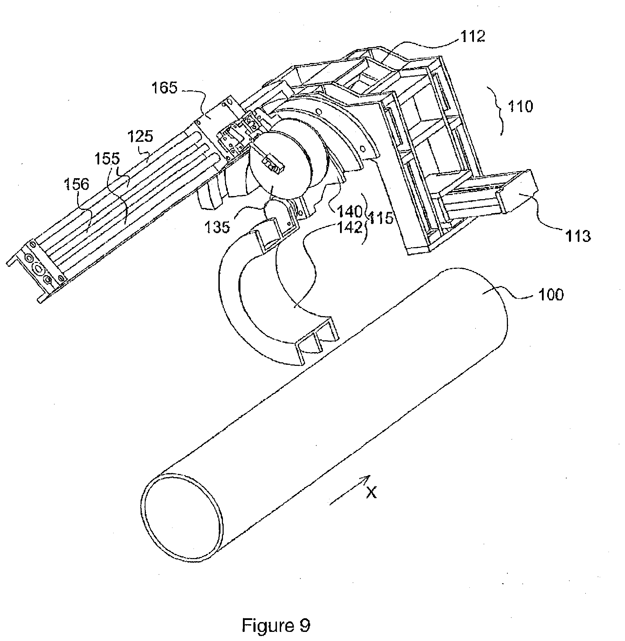

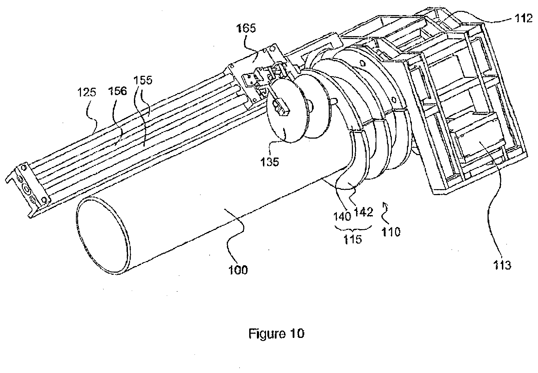

Un exemple de moyen 21 de blocage est illustré en regard de la figure 5. Un exemple de moyen 22 de positionnement, préférentiellement sur cinq axes, est succinctement exposé en regard des figures 9 et 10. Un exemple de moyen de guidage d'outil est illustré en regard des figures 2 à 8.

En option, on prévoit un touret porte-outil (non représenté) entre le moyen de guidage 23 et l'outil 25. L'outil 25 est, par exemple, constitué d'une caméra ou d'une sonde à ultrason, pour l'inspection de la canalisation ou le guidage d'un autre outil, d'un moyen de dépose d'une bande de réparation (comme exposé dans les autres figures), d'un moyen de décapage, d'un moyen de découpe, par exemple à laser ou à scie, d'un moyen d'usinage, de sablage, de grenaillage, de traitement de surface. L'outil peut aussi être un sous-ensemble permettant d'autres opérations telles que l'apport de matériau d'obturation, le surfaçage de ce matériau après dépôt, l'application du revêtement primaire d'accrochage, l'enlèvement de matériaux de protection ou de lestage initiaux avant réparation, etc...

En option, on prévoit aussi un porte-outil ou un boîtier de rangement d'outils (non représentés), préférentiellement en extrémité du dispositif objet de la présente invention.

On observe, en figure 2, que, avant fixation et positionnement précis du dispositif sur le corps longiligne 35, deux demi couronnes 31 et 32, dont les surfaces intérieures sont adaptées à la section du corps longiligne 35, forment, entre elles, un angle sensiblement droit. Le corps longiligne 35 peut donc être inséré dans l'une des demi couronnes 31 et 32. Ici, c'est la demi couronne 31 qui est fixe par rapport au moyen de blocage du dispositif.

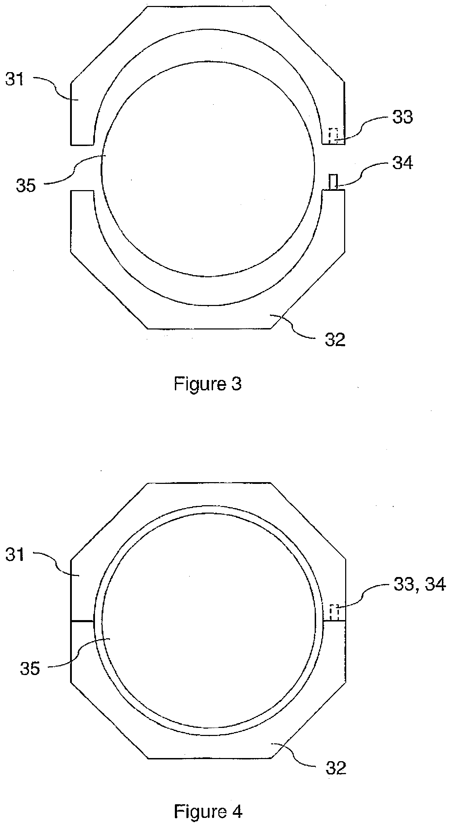

Comme illustré en figure 3, une fois le corps longiligne partiellement inséré dans la demi couronne 31, on rabat la demi couronne 32 en regard de la demi couronne 31 pour entourer le corps longiligne 35 par deux demi couronnes positionnées de manière symétrique mais sans qu'elles ne se touchent entre elles. Au moins un pion de centrage 34 de la demi couronne 32 fait alors face à une ouverture 33 de forme complémentaire dans la demi couronne 31.

Enfin, comme illustré en figure 4, on referme les deux demi couronnes 31 et 32 sur le corps longiligne 35 par un mouvement de translation l'un par rapport à l'autre, ce mouvement étant perpendiculaire à l'axe du corps longiligne 35. Au cours de ce mouvement de translation, chaque pion de centrage vient se positionner dans une ouverture de forme complémentaire.

Du fait que le dernier mouvement entre les demi couronnes 31 et 32 est un mouvement de translation, les pions de centrage 34 et leurs formes complémentaires 33 peuvent présenter des tolérances mécaniques très faibles, ce qui assure une grande précision de positionnement des demi couronnes entre elles. De plus, on évite un frottement sur le corps longiligne 35, frottement qui aurait pu être néfaste à son état de surface, voire lui appliquer des efforts de torsion entre ses deux demi circonférences prises entre des demi couronnes 31 et 32 si elles avaient effectuer, entre elles, un mouvement de rotation. Ces efforts de torsion auraient, en effet, pu provoquer des déformations temporaires nuisibles au traitement à appliquer, surtout si celui-ci est une réparation, voire provoquer des crevasses, des points de faiblesse, voire des déchirures de la paroi du corps longiligne 35.

Un couronne est ainsi constituée, autour du corps longiligne 35, par les deux demi couronnes 31 et 32.

On observe, en figure 5, que le moyen de blocage 21 peut prendre la forme de deux mâchoires 41 et 43. Les deux mâchoires 41 et 43 sont, dans le présent exemple, adaptées à se fixer sur plusieurs diamètres de canalisations. A cet effet, la mâchoire 43 est prolongée par des supports 46, 48 et 49. La mâchoire 41 peut ainsi être déplacée longitudinalement, en l'insérant dans un support choisi parmi les supports 46, 48 et 49, en fonction du diamètre de la canalisation 100 et, d'autre part, transversalement, comme on le voit en deux positions extrêmes de ce mouvement transversal, en figures 9 et 10.

Les deux mâchoires 41 et 43 se fixent autour de la canalisation 100 et se solidarisent entre elles grâce à des moyens de fixation et/ou d'ajustement. Par exemple, le mouvement des mâchoires 41 et 43 est similaire à celui d'un serre-joint. La mâchoire 43 est munie de deux patins, ou coussinets 44 et 45, formant un angle entre eux, pour accueillir différents diamètres de corps longiligne 35. Eventuellement, pour adapter le dispositif à des corps longilignes 35 de petit ou de gros diamètre, on change les patins 44 et 45 pour des patins plus ou moins épais.

La mâchoire 41 est munie d'un patin 47 permettant de protéger le corps longiligne 35 lors du serrage.

Une vis sans fin 42 permet ce serrage.

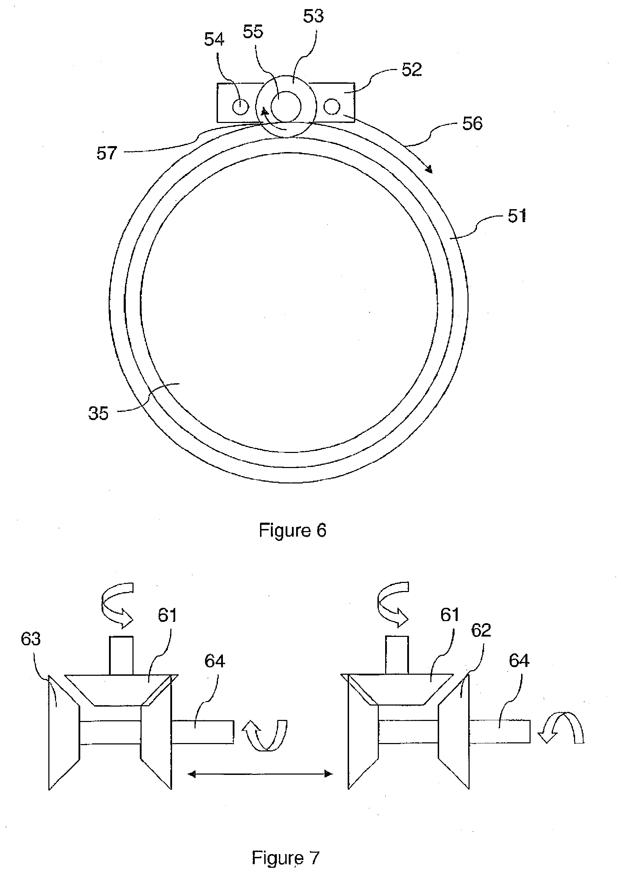

On observe, en figure 6, un moyen 52 d'entraînement en rotation de l'outil autour du corps longiligne 35, ici manuel,
- un moyen 55 d'entraînement en translation de l'outil parallèlement à l'axe du corps longiligne 35 et
- un moyen de liaison entre les moyens d'entraînement configuré pour faire parcourir à l'outil une hélice en regard de la surface externe du corps longiligne.

Dans le mode de réalisation illustré en figures 6, 9 et 10, le moyen de liaison comporte :
- une roue dentée 51 fixe par rapport au corps longiligne 35 sur laquelle s'engrène une roue dentée mobile 53 solidaire d'une vis sans fin 55, l'axe de la roue dentée mobile 53 étant entraîné en rotation autour du corps longiligne par le moyen 55 d'entraînement en rotation et
- un support 52 ou 165 de l'outil déplacé parallèlement à l'axe du corps longiligne par la rotation de la vis sans fin 55.

La roue dentée 51 est préférentiellement formée de deux demi roues dentées solidaires des deux demi couronnes illustrées en figures 2 à 4. Ainsi, grâce aux pions de centrage 34, les deux demi roues dentées sont précisément positionnées entre elles, ce qui évite que des dents soient irrégulières à la liaison des demi roues dentées.

Une poutre 52 porte, parallèlement, la vis sans fin 55, qui prolonge la roue dentée mobile 53 et deux barres droites lisses 54. Un chariot 165 (visible en figures 9 et 10) formant support de l'outil, est en appui sur les barres 54 et 155 et présente un filetage interne dans lequel tourne la vis sans fin 55.

Comme on le comprend, lorsque la poutre 52 est mise en mouvement de rotation autour de l'axe du corps longiligne 35, comme l'indique la flèche 56, l'engrenage des roues dentées fixe 51 et mobile 53 provoque la rotation de la roue mobile 53, comme illustré par la flèche 57. Cette rotation entraîne la vis sans fin 55, ce qui provoque la translation du chariot et de l'outil.

Parmi les avantages de ce mode de réalisation, on peut citer que le moyen de liaison est configuré pour que le pas de l'hélice suivie par l'outil soit constant quelle que soit la section du corps longiligne. De même, le moyen de liaison est configuré pour que le pas de l'hélice suivi par l'outil soit constant quel que soit le centrage du dispositif de déplacement sur le corps longiligne.

En option, une protection (non représentée) de la roue dentée fixe 51 est ajoutée.

On observe, en figure 7, un moyen d'inversion de sens de translation actionné par l'arrivée de l'outil en fin de course longitudinale. Lorsque l'outil arrive en fin de course, au bout du moyen de guidage, un engrenage inverse la relation entre la rotation et la translation. Ainsi, en poursuivant la rotation de l'outil dans le même sens autour de la canalisation, on provoque son retour sur la même partie de la canalisation, avec un pas identique à celui de l'aller.

En figure 7, le moyen d'inversion comporte un double pignon conique, dont une roue dentée 61, dite d'entrée, est libre en translation pour s'égrener alternativement sur l'une ou l'autre des autres roues dentées 62 et 63. Le moyen d'inversion de sens de rotation illustré en figure 7 est positionné entre une roue dentée 53 et la vis sans fin 55. Le changement de sens d'avancement longitudinal du support d'outil se fait ainsi grâce à ce moyen d'inversion, situé en tête de la vis sans fin. La commande de la position de la roue dentée 61 présente trois positions : avance, point mort et sens contraire,

La translation de la roue dentée d'entrée 61 entre une position extrême, une position de point mort et l'autre position extrême est provoquée soit manuellement par l'opérateur soit par un moteur hydraulique, pneumatique ou électrique, sous la commande de l'opérateur ou à la détection d'un contact du support de l'outil avec une butée de fin de course longitudinale. La vis sans fin 64, qui entraîne en translation un support de l'outil, tourne ainsi alternativement dans un sens et dans l'autre.

Le support d'outil tourne alors toujours dans le même sens autour du corps longiligne, dans le sens d'entraînement donné par le plongeur ou par un moteur hydraulique ou électrique sous marin.

La manipulation de la position de la roue dentée 61 peut aussi se faire soit par l'intermédiaire d'un bras manipulateur télé-opéré depuis un sous marin ou soit par un dispositif de butée lorsque l'outil arrive en fin de course. Un poussoir déplaçant la roue dente 61 peut être automatisé soit hydrauliquement soit par un électroaimant.

Lorsque l'outil doit voir sa position changer simultanément au changement du sens de translation, un doigt (non représenté) fait tourner cet outil. On note que les butées peuvent être déplacées au cours du traitement (par exemple une dépose de bande) pour modifier la longueur de canalisation traitée entre deux passages successifs de l'outil.

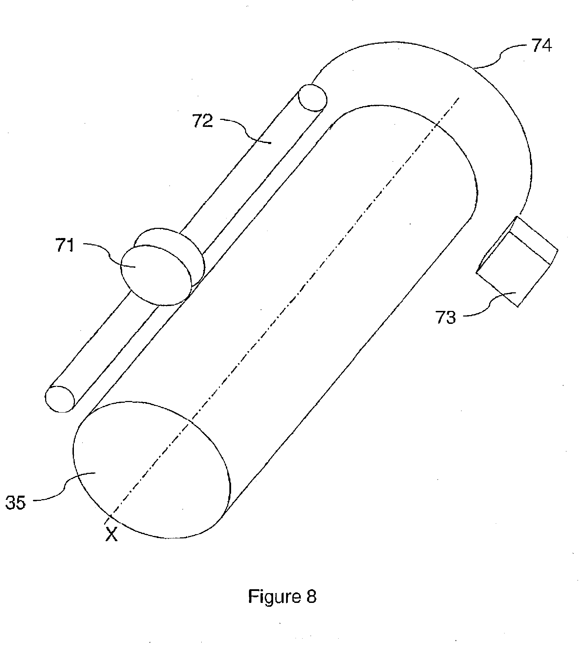

On observe, en figure 8, que pour maintenir le centre de gravité des parties mobiles 71, 72 et 74 du dispositif, on prévoit, préférentiellement, un contrepoids mobile 73, dont le centre de gravité est symétrique, par rapport à l'axe du corps longiligne 35, du centre de gravité des autres parties mobiles, 71, 72 et 74.

On évite ainsi une déformation du dispositif sous l'effet de son poids et des efforts de l'opérateur pour lutter contre le poids des parties mobiles.

En figure 8, l'outil est une bobine 71 de bande pré-imprégnée polymérisable liée à un support 72 attaché au dispositif. Le support est configuré pour se mouvoir en rotation autour du moyen de fixation, et donc autour du corps longiligne 35. Le support 72 entraîne aussi la bobine afin d'enrouler la bande pré-imprégnée polymérisable autour de la zone de la surface à réparer ou à renforcer. La bobine 71 est liée au support par une liaison qui lui permet d'effectuer un mouvement longitudinal dans les deux sens selon une direction prédéterminée, de préférence selon une direction parallèle à l'axe X. L'amplitude de ce mouvement est déterminée par des moyens du support, par exemple par la longueur du support.

Dans ce mode de réalisation, le fonctionnement du dispositif est le suivant. Une fois le dispositif installé sur le corps longiligne 35 au niveau de la zone à réparer, la bobine 71 est actionnée en rotation autour de la surface afin d'enrouler la bande pré-imprégnée polymérisable autour de la zone à réparer ou à renforcer. Le mouvement en rotation est accompagné d'un mouvement en translation parallèlement à un axe longitudinal du corps longiligne prédéterminé dans un premier sens. Une fois la première couche de bande pré-imprégnée polymérisable enroulée, la bobine est actionnée en rotation et en translation dans le sens opposé, ce qui permet d'enrouler de manière homogène, et avec un pas d'enroulement régulier, une deuxième couche par-dessus la première. Plusieurs couches de bande pré imprégnée polymérisable sont ainsi enroulées sur la zone à réparer ou à renforcer. Le dispositif permet un enroulement de la bande homogène, c'est-à-dire avec une tension d'enrubannage et un pas réguliers ce qui permet de restituer l'intégrité mécanique de la zone altérée.

Dans le cas de la dépose d'une bande, ou « bandage », le parcours de la spirale met automatiquement l'axe de la bobine supportant la bande à poser à la perpendiculaire de la bande libre entre la bobine et la canalisation.

On effectue préférentiellement jusqu'à 80 passages de la bande sur la canalisation.

En référence aux figures 9 et 10, on décrit un mode particulier de réalisation du dispositif de réparation ou de renforcement local objet de l'invention.

Dans ce mode de réalisation, le corps longiligne à réparer ou à renforcer localement est une canalisation sous-marine transportant un fluide. Toutefois, le dispositif 110 est adapté à tout type de canalisation et à d'autres types de tubes, tels que les mâts de bateau ou les colonnes de piliers. Une portion d'une canalisation 100 tubulaire présente une zone altérée dans son intégrité, c'est-à-dire présentant une fissure, un enfoncement, une érosion ou une corrosion interne ou externe par exemple.

Le dispositif 110 objet de l'invention permet la réparation ou le renforcement local d'une zone endommagée de la surface d'une canalisation 100 par l'enroulement autour de la zone à réparer d'une ou plusieurs couches de bande pré-imprégnée.

Le dispositif 110 comprend :
- un moyen de fixation amovible sur la canalisation 100,
- un moyen de déplacement en rotation d'une structure de support 125 autour du moyen de fixation et par là autour de la canalisation 100,
- un moyen de déplacement longitudinal d'une bobine 135 de bande pré-imprégnée polymérisable par rapport à la structure du support 125, ledit support comportant des moyens pour limiter le déplacement de la bobine à un parcours prédéterminé, ladite bobine 135 étant déroulable lorsqu'elle est soumise à une tension donnée.

Le dispositif 110 permet le mouvement en rotation et en translation de la bobine 135, ce qui provoque l'enroulement autour de la canalisation 100 de la bande pré-imprégnée polymérisable, avec une tension homogène et un pas d'enroulement réglable. La bobine 135 est amovible. Elle peut être remplacée par une autre bobine sur le support.

La figure 10 représente un mode particulier de réalisation du dispositif 110. Dans ce mode de réalisation, le dispositif 110 se fixe de manière amovible sur la canalisation 100 par un moyen de fixation. Ce moyen de fixation comprend, dans ce mode de réalisation, au moins deux mâchoires 112 et 113. Les deux mâchoires 112 et 113 sont, dans le présent exemple nullement limitatif de mise en œuvre, adaptées à se fixer sur plusieurs diamètres de canalisations, comme illustré en figure 5. A cet effet, comme illustré en figure 10, la mâchoire 112 est prolongée par un support le long duquel la mâchoire 113 peut être déplacée longitudinalement, en fonction du diamètre de la canalisation 100 et, d'autre part, transversalement, comme on le voit en deux positions extrêmes de ce mouvement transversal, en figures 9 et 10.

Les deux mâchoires 112 et 113 se fixent autour de la canalisation 100 et se solidarisent entre elles grâce à des moyens de fixation et/ou d'ajustement. Par exemple, le mouvement des mâchoires 112 et 113 est similaire à celui d'un serre-joint. Les deux mâchoires 112 et 113 sont munies de patins ou coussinets permettant de protéger la canalisation 100 lors du serrage.

Dans ce mode de réalisation, le dispositif comporte aussi au moins deux demi roues dentées 140 et 142 sur leur circonférence, destinées à se fixer entre elles autour du corps longiligne 100 pour entraîner la vis sans fin 156. On note que, en prévoyant quatre demi roues dentées, pour former deux engrenages identiques et parallèles mais séparés sur les demi roues dentées 140 et 142, on améliore la tenue en position de la structure de support de la bobine 135, par rapport à l'utilisation de deux demi roues dentées.

Le mouvement de rotation de la structure de support 125 autour du corps longiligne 100 et le déplacement longitudinal de la bobine sont mécaniquement dépendants de telle sorte que le pas entre deux passages successifs de la bande pré-imprégnée polymérisable est constant le long du corps longiligne 100.

Dans le mode de réalisation illustré en figure 10, la liaison entre le mouvement de rotation de la structure de support 125 et le déplacement longitudinal de la bobine 135 comporte un engrenage dont une roue dentée (représentée en figure 6 sous la référence 51), constituée des deux demi roues dentées 140 et 142, et dont l'autre roue dentée (représentée en figure 6 sous la référence 53) est solidaire des moyens de déplacement longitudinal.

La rotation de la structure de support 125 met en mouvement l'engrenage, la roue dentée solidaire des moyens de déplacement longitudinal entraînant une vis sans fin 156 mettant en déplacement la bobine 135 parallèlement à l'axe longitudinal du corps longiligne 100.

Préférentiellement, la liaison mécanique entre le mouvement de rotation de la structure de support 125 et le déplacement longitudinal de la bobine 135 est configurée pour que le pas entre deux passages successifs de la bande pré-imprégnée polymérisable soit inférieur à la largeur de la bande pré-imprégnée polymérisable.

Dans ce mode de réalisation, le dispositif comporte aussi un ensemble 115 d'au moins deux demi guides circulaires constitués des demi roues dentées 140 et 142 munies de flancs protégeant l'engrenage auxquelles les demi roues dentées participe, comme exposé en regard de la figure 6, pour guider la rotation de la structure de support autour de la canalisation 100.

Un support longitudinal 125 est lié au moyen de fixation du dispositif. Dans ce mode de réalisation, le support longitudinal 125 est une poutre d'une rigidité supérieure à une valeur prédéterminée, triangulée par une barre diagonale.

Des barres 155 longitudinales configurées pour soutenir une bobine 135 sont fixées sur la poutre 125 du support. En outre, la poutre 125 est fixée au moyen de fixation du dispositif 110 par l'une de ses extrémités de manière à permettre au support 125 de se mouvoir en rotation autour du moyen de fixation et donc autour de la canalisation 100. Cette fixation est effectuée, dans un exemple de réalisation, par un système de pied à coulisse. De plus, un système de pignons, coopérant avec des crantages des demi roues dentées 140 et 142 du moyen de fixation, permet le mouvement en rotation du support 125 autour du moyen de fixation.

Préférentiellement, le pas entre deux passages successifs de la bande pré-imprégnée polymérisable est inférieur à la largeur de la bande pré-imprégnée polymérisable.

La mise en mouvement du support 125 en rotation, de manière manuelle ou motorisée, entraîne simultanément la bobine 135 en rotation afin d'enrouler la bande pré-imprégnée polymérisable autour de la zone de la canalisation 100.

La poutre 125 permet de conférer une grande stabilité au dispositif notamment lorsque la bobine 135 est en mouvement. La barre diagonale renforce encore davantage la rigidité du dispositif.

La bobine 135 est liée à trois barres sensiblement parallèles 155 du support 125 tout en restant libre en translation par rapport à ces barres 155. Ces barres 155 permettent de positionner la bobine 135 de manière stable selon une orientation optimale par rapport à la canalisation 100, notamment selon une distance et un angle prédéterminés par rapport à la surface de la canalisation 100. Ainsi, la bobine 135 est liée au support 125 par une liaison qui lui permet d'effectuer un mouvement longitudinal dans les deux sens selon une direction prédéterminée. L'amplitude de ce mouvement est déterminée par des moyens du support, par exemple ici par la longueur des barres 155 du support 125.

Par ailleurs, dans un exemple de réalisation donné ici à titre d'exemple, la bobine 135 est reliée à un chariot 165 comprenant des rouleaux de mise en tension de la bande et/ou d'application de la bande sur la canalisation 100 avec une gamme de tensions d'enrubannage prédéterminée quel que soit le nombre de tours d'enroulement nécessaires.

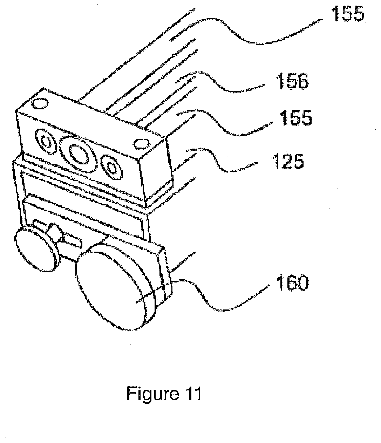

Comme illustré en figure 11, dans des modes de réalisation, une roulette 160 est ajoutée en bout de poutre 125. Cette roulette 160 repose sur la canalisation 100 et permet une meilleure stabilité de la structure de support de la bobine 135 lors de son mouvement en rotation autour de la canalisation 100. Dans des variantes, un patin (non représenté) pourvu d'un revêtement antifriction comme, par exemple, du téflon remplace la roulette 160 pour réaliser la même fonction de stabilisation et évite les problèmes liés à un éventuel grippage de la roulette 160.

Pour son fonctionnement, le dispositif 110 est tout d'abord amené au droit de la zone de canalisation à réparer, et fixé sur ladite canalisation 100. Une fois installée sur la canalisation 100 au niveau de la zone à réparer, la bobine 135 est actionnée en rotation autour de la canalisation 100 afin d'enrouler la bande pré-imprégnée autour de la zone à réparer. Le mouvement en rotation est accompagné d'un mouvement en translation selon un axe longitudinal de la canalisation 100 prédéterminé dans une première direction.

Une fois la première couche de bande pré-imprégnée polymérisable enroulée, la bobine 135 est actionnée en rotation et en translation selon le sens opposé. Ce qui permet d'enrouler de manière homogène et avec un pas d'enroulement régulier une deuxième couche par-dessus la première.

Plusieurs couches de bande pré-imprégnée polymérisable sont ainsi enroulées sur la zone à réparer ou à renforcer localement. Le dispositif 110 réalise un enroulement de la bande homogène, c'est-à-dire avec une tension d'enrubannage et/ou une pression et un pas réguliers ce qui permet, par exemple, de restituer l'intégrité mécanique de la zone altérée de la canalisation.

On note que deux phénomènes sont concomitants. D'une part, la tension initiale de la bande qui est assurée par un dispositif tel qu'un frein de dévidement d'une cassette porte bande. D'autre part, la valeur de la tension d'enrubannage, qui peut varier d'un facteur de deux sans influencer la qualité de la réparation permet un essorage de la résine et de l'eau interstitielle et par suite une bonne application d'une bande sur la canalisation 100 ou sur une autre bande. Cette tension d'enrubannage est la conséquence de la tension initiale de la bande.

Plus précisément, le procédé de réparation ou de renforcement local d'un corps longiligne comprend :
- une étape de fixation d'un dispositif 110 tel que décrit ci-dessus sur la canalisation 100 grâce aux moyens de fixation 112 et 113,
- une étape d'actionnement du dispositif 110 par la mise en mouvement de la bobine 135 en rotation autour de la canalisation 100 et en translation selon une direction longitudinale de la canalisation 100 ce qui permet l'enroulement de couches successives de bandes pré-imprégnées polymérisables autour d'une zone prédéterminée de la canalisation 100,
- une étape de retrait du dispositif 110, et
- une étape de polymérisation des bandes pré-imprégnées polymérisables.

Ainsi, dans une première étape, un opérateur fixe le dispositif 110 au niveau de la zone de la canalisation 100 à réparer par les moyens de fixation 112 et 113. Le dispositif 110 est facilement transportable sur le lieu de la réparation et son poids est adapté à la manipulation par un ou plusieurs opérateurs ou plongeurs dans le cas d'une canalisation 100 sous-marine. Il est également adapté à la manipulation par un automate commandé à distance.

De plus le dispositif est adaptable à plusieurs diamètres de canalisation 100 et à des tailles variables de la zone à réparer.

Ensuite, dans une deuxième étape, les demi roues dentées sont solidarisées pour former une roue dentée, ou couronne, autour de la canalisation, comme exposé en regard des figures 2 à 4.

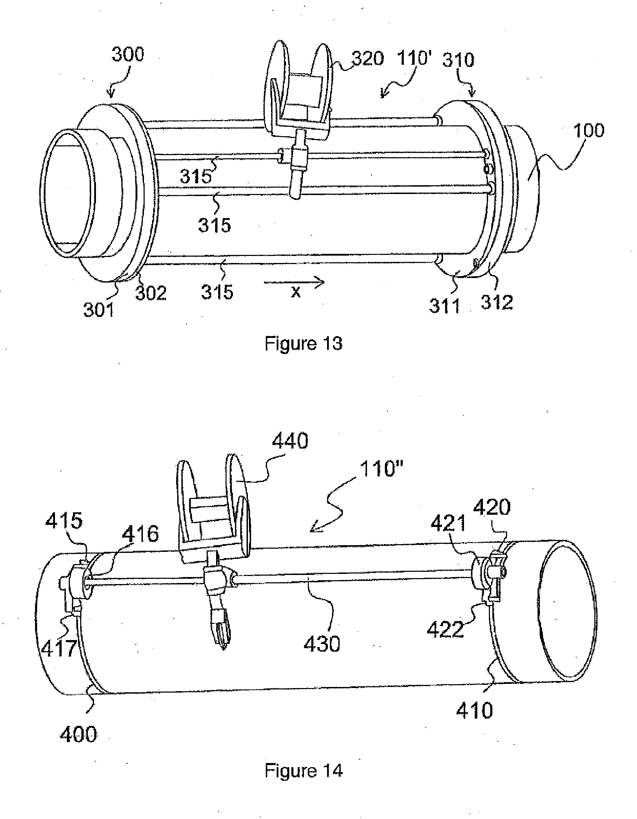

Puis, le dispositif 110 est actionné manuellement ou automatiquement par la mise en mouvement de rotation de la bobine 135 (ou 320 ou 440, en figures 13 et 14) autour des moyens de fixation 112 et 113 et donc de la canalisation 100. Dans le même temps la bobine est mue en translation selon une direction longitudinale dans un premier sens afin d'enrouler une première couche de bande pré-imprégnée polymérisable autour de la zone à réparer. La bobine 135, 320, 440 est maintenue sur le support selon une distance et un angle par rapport à la canalisation 100 prédéterminé ce qui permet un enroulement avec une tension d'enrubannage et un pas réguliers. Le parcours en translation de la bobine 135, 320, 440 est délimité dans les deux sens par des moyens du support. Une fois la première couche enroulée, la bobine 135, 320, 440 est actionnée dans le sens opposé de translation, toujours également en rotation autour de la canalisation 100 ce qui permet d'enrouler une deuxième couche de bande pré-imprégnée polymérisable par-dessus la première. Les couches de bande sont ainsi superposées de manière optimale en termes de tension d'enrubannage et avec un pas régulier. Les opérations nécessitent peu d'efforts de la part d'opérateurs pour une réparation de qualité. Les actions sont répétées pour enrouler autant de couches que nécessaire pour permettre la réparation de la zone endommagée ou un renforcement local de la canalisation.

Dans des modes de réalisation particuliers, entre deux parcours d'une bobine 135, 320, 440 le long et autour de la canalisation, on remplace la bobine 135, 320, 440 pour changer, entre deux couches successives, les caractéristiques, notamment chimiques ou mécaniques, de la bande pré-imprégnée polymérisable à enrouler. Par exemple, les bandes successives peuvent présenter des constituants différents (par exemple, fibres de carbone, fibres de verre ou autre constituant), des résines différentes, des tissages différents, des orientations de fibres ou de fils différentes, des largeurs différentes ou des épaisseurs différentes, On réalise ainsi une superposition de couches de bandes qui, une fois polymérisées, combinent leurs avantages techniques respectifs, notamment en termes de rigidité, isotropie, souplesse ou étanchéité.

Dans une troisième étape, le dispositif 110 est retiré de la canalisation 100, et dans une dernière étape, la polymérisation de la bande pré-imprégnée polymérisable est déclenchée par des moyens connus de l'homme du métier qui dépendent notamment du type de bande pré-imprégnée polymérisable utilisée et des conditions de la réparation. Par exemple cette polymérisation peut-être déclenchée par rayons ultraviolets ou par un apport thermique.

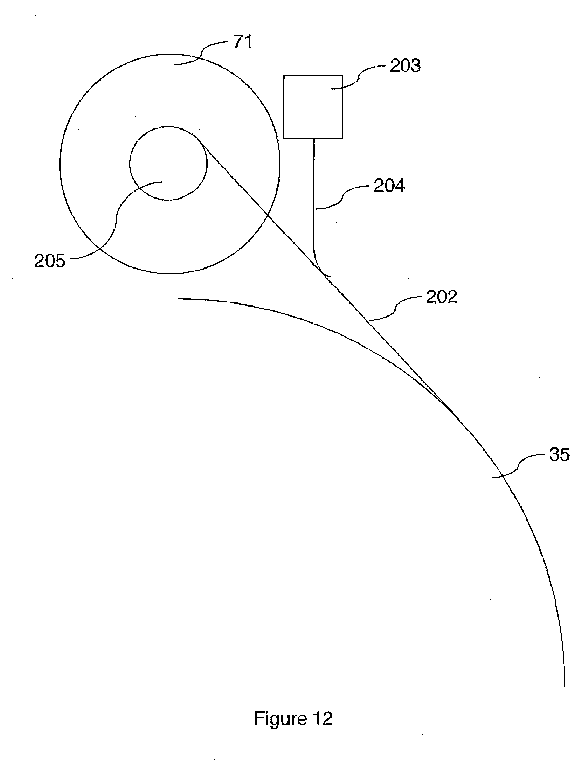

On observe, en figure 12, des moyens pour détecter qu'une bobine 71 est vide. A cet effet, sur le chemin de la bande 202, allant de la bobine 71 au corps longiligne 35, en suivant une tangente au corps longiligne 35, on dispose une lame 204 qui est reliée à un capteur 203 de déplacement de la lame 204 ou un système sans contact (par exemple un détecteur de proximité). Par exemple, ce capteur 203 est un interrupteur qui est fermé lorsque aucune force ne s'exerce sur la lame 204 ou un capteur optique.

Dans des modes de réalisation préférentiels, la détection d'une fin de bande dans la bobine 71 bloque la rotation du porte-outil.

Dans d'autres modes de réalisation, le capteur 203 provoque l'émission d'un signal, par exemple l'allumage d'un témoin lumineux ou d'un gyrophare (non représentés), ou encore l'émission d'un signal haptique comme une vibration, afin que l'opérateur soit immédiatement informé de la fin de bande.

Pour assurer une valeur de tension d'enrubannage comprise dans un intervalle de tensions s'étendant d'une valeur prédéterminée au double de cette valeur prédéterminée, un moyen de gestion 205 de la tension de la bande peut être incorporé dans le moyeu du support de la bobine 71. Par exemple, ce moyen de gestion 205 de la tension est un limiteur de couple. Comme exposé par ailleurs, la tension constante de la bande favorise la qualité de la réparation.

Pour le premier tour de l'outil autour de la canalisation, afin d'assurer l'adhérence de la bande sur la canalisation, on ajoute, en début de bande, un aimant ou on fait effectuer, manuellement, un tour de canalisation à la bande et on retient ce tour pendant le début de la rotation de l'outil.

Dans des modes de réalisation, le dispositif objet de la présente invention est muni d'au moins un flotteur. Par exemple, chaque flotteur est constitué d'un pain de mousse (par exemple en polyuréthane, polyéthylène ou synthétique) découpé à la demande. Préférentiellement, plusieurs flotteurs ainsi constitués sont assemblés entre eux puis solidarisés au dispositif pour améliorer sa flottabilité. Grâce à ces flotteurs, par exemple disposés le long de la poutre 52, on peut manipuler facilement la machine dans l'eau, son poids apparent, ajusté par ces flotteurs, devenant nul ou faible. Préférentiellement, on donne à ses flotteurs une forme la plus hydrodynamique possible, adaptée pour limiter la prise au courant. Alternativement, et notamment par faible profondeur, on peut utiliser des parachutes, bulles d'air ensachée dans un sac, gonflés à la demande par le plongeur et attachés à la machine à manipuler.

Les figures 13 et 14 représentent des variantes de réalisation.

La figure 13 représente, schématiquement, un mode de réalisation alternatif du dispositif 110' objet de l'invention.

Dans ce mode de réalisation, le moyen de fixation du dispositif 110' à la canalisation 100 comprend deux ensembles 300 et 310 de deux demi guides formés d'une gorge, respectivement 301 et 312, entourée de flancs, respectivement 302 et 311, portant des barres 315 de guidage parallèles à l'axe de la canalisation 100. Une bobine 320 est portée par une structure de support montée sur au moins une barre de guidage 315.

La figure 14 représente, schématiquement, un mode de réalisation alternatif du dispositif 110" objet de l'invention.

Dans ce mode de réalisation, le moyen de fixation du dispositif 110" à la canalisation 100 comprend deux chaînes 400, 410 configurées pour se fixer de part et d'autre de la zone endommagée de la canalisation 100. Chacune des chaînes 400, 410 effectue un parcours entre des roues dentées 415, 416, 417, 420, 421, 422 mobiles en rotation sur la chaîne 400, 410. Dans ce mode de réalisation, chaque chaîne 400, 410 effectue un parcours entre trois roues dentées 415, 416, 417 et 420, 421, 422, respectivement.

Les roues dentées 416 et 421 sont ainsi entraînées en rotation sur elles-mêmes lors de la rotation de la barre 430, qui forme leur axe commun, autour de la canalisation 100.

Le support est composé d'une barre 430 longitudinale, de longueur prédéterminée, qui est en liaison à chacune de ses extrémités avec les roues dentées 415, 416, 417, 420, 421, 422.

Sur la barre du support 430 est fixée une bobine 440 de bande pré-imprégnée. Cette bobine 440 configurée pour se mouvoir en translation sur la barre du support 430, dans les deux sens.

Il est notable que le dispositif objet de la présente invention est simple de mise en œuvre, ce dispositif étant facilement transportable sur le site et aisément actionnable par un opérateur. Alternativement, le dispositif peut être mis en oeuvre par un automate, notamment de type commandé à distance qui permet de s'assurer de la répétabilité du processus de renforcement ou de réparation.

Le dispositif est adapté à la réparation ou au renforcement local des canalisations terrestres ou sous-marines transportant des fluides ou des gaz, par exemple les oléoducs.

La bobine étant amovible, elle peut être remplacée par une autre bobine autant de fois que nécessaire pour la réparation de la zone altérée.

Lorsqu'on enroule des couches successives de bande pré-imprégnée polymérisable il faut tenir compte de l'augmentation du diamètre. L'avantage du dispositif de l'invention est qu'il permet un enroulement de la bande avec une tension et un pas réguliers. De plus, le pas et la tension de la bande ajustés au fur et à mesure de l'enroulement ce qui permet une réparation durable et pérenne. Dans des modes de réalisation préférés, l'enroulement peut être interrompu à tout moment par l'opérateur.

Dans une application, le dispositif objet de la présente invention est intégré à ou porté par un engin sous-marin (non représenté). Préférentiellement, cet engin sous-marin et le dispositif objet de la présente invention sont commandés à distance. A cet effet, l'engin sous-marin objet de la présente invention comporte des moyens de communication et des moyens d'actionnement à distance du dispositif. Préférentiellement, l'engin sous-marin comporte au moins une caméra et un dispositif de transmission à distance d'images captées par chaque caméra. Ainsi, un opérateur situé à distance peut visualiser et commander la mise en place du dispositif sur le corps longiligne, puis le fonctionnement du dispositif.

## Revendications

1. Dispositif de réparation ou de renforcement local d'un corps longiligne (35, 100) présentant une altération de son intégrité, ledit dispositif étant destiné à l'enroulement autour du corps longiligne d'une ou plusieurs couches de bande (71, 135, 202), ledit dispositif comprenant :
- deux demi couronnes (31, 32) présentant, chacune, deux extrémités configurées pour venir en contact entre elles,
- des moyens pour déplacer, l'une par rapport à l'autre, les deux demi couronnes jusqu'à ce qu'elles entourent, sans se toucher, le corps longiligne et
- des moyens pour déplacer en translation selon un axe perpendiculaire à l'axe du corps longiligne, l'une par rapport à l'autre, les deux demi couronnes jusqu'à ce que leurs extrémités se touchent pour former une couronne entourant le corps longiligne, le dispositif comportant en outre, un moyen de blocage préliminaire comportant :
- une mâchoire fixe (43) munie d'au moins deux patins (44, 45) formant, entre eux, un angle obtus,
- un support (42) de mâchoire amovible (41) comportant au moins un guide (46, 48, 49) pour la mâchoire amovible, chaque dit guide guidant un déplacement de la mâchoire amovible parallèlement à la mâchoire fixe,
- la mâchoire amovible et
- un moyen de déplacement de la mâchoire amovible supportée par un guide du support vers la mâchoire fixe.

2. Dispositif selon la revendication 1, qui comporte, sur au moins une des demi couronnes (31, 32), au moins un pion de centrage (34) correspondant, dans l'autre demi couronne, à une ouverture (33) de forme complémentaire à la forme dudit pion de centrage.

3. Dispositif selon l'une quelconque des revendications précédentes, dans lequel le support (42) de mâchoire amovible comporte une pluralité de guides (46, 48, 49) pour la mâchoire amovible, lesdits guides étant à différentes distances de la mâchoire fixe.

4. Dispositif selon l'une quelconque des revendications précédentes, qui comporte :
- un moyen (23) d'entraînement en rotation d'une bobine (71, 135) de bande pré-imprégnée polymérisable (202) autour du corps longiligne (35, 100),
- un moyen (54) d'entraînement en translation de la bobine parallèlement à l'axe du corps longiligne et
- un moyen (55) de liaison entre les moyens d'entraînement configuré pour faire parcourir à l'outil une hélice en regard de la surface externe du corps longiligne.

5. Dispositif selon la revendication 4, dans lequel le moyen (55) de liaison comporte :
- deux demi roues dentées fixes (51) par rapport aux demi couronnes sur laquelle s'engrène une roue dentée mobile (53) solidaire d'une vis sans fin (55), l'axe de la roue dentée mobile étant entraîné en rotation autour du corps longiligne (35, 100) par le moyen d'entraînement en rotation et
- un support (52, 165) de la bobine déplacé parallèlement à l'axe du corps longiligne par la rotation de la vis sans fin.

6. Dispositif selon l'une quelconque des revendications 4 ou 5, dans lequel le moyen d'entraînement en rotation est manuel.

7. Dispositif selon l'une quelconque des revendications 4 à 6, dans lequel le moyen (55) de liaison comporte un moyen (61, 62, 63, 64) d'inversion de sens de translation actionné lors de l'arrivée de l'outil en fin de course longitudinale.

8. Dispositif selon la revendication 7, dans lequel le moyen (61, 62, 63, 64) d'inversion comporte un double pignon conique, dont une roue dentée, dite d'entrée, est libre en translation pour s'égrener alternativement sur l'une ou l'autre des autres roues dentées, la translation de la roue dentée d'entrée étant provoqué par une butée de fin de course longitudinale.

9. Dispositif selon l'une quelconque des revendications 4 à 8, dans lequel la bobine (71, 135) est libre en rotation par rapport à un axe perpendiculaire à la bande (202) de matériau et à l'axe du corps longiligne (35, 100).

10. Dispositif selon l'une des revendications 4 à 9, qui comporte un moyen (203, 204) de détection de fin de bande (202) sur la bobine (71, 135).

11. Dispositif selon l'une quelconque des revendications précédentes, qui comporte un contrepoids (73) configuré pour que le centre de gravité du dispositif soit sensiblement sur l'axe du corps longiligne (35, 100).

12. Dispositif selon l'une quelconque des revendications précédentes, qui comporte au moins un flotteur de densité inférieure à la densité de l'eau.

## Patentansprüche

1. Vorrichtung zur Reparatur oder lokalen Verstärkung eines lang gestreckten Körpers (35, 100), der eine Änderung seiner Unversehrtheit aufweist, wobei die Vorrichtung zur Umwicklung mit einer oder mehreren Bandschichten (71, 135, 202) um den langgestreckten Körper herum dient, wobei die Vorrichtung umfasst:
- zwei Halbkronen (31, 32), die jeweils zwei Enden aufweisen, die ausgebildet sind, miteinander in Kontakt zu kommen,
- Mittel zum Bewegen der zwei Halbkronen zueinander, bis sie, ohne sich zu berühren, den langgestreckten Körper umgeben und
- Mittel zum linearen Verschieben der zwei Halbkronen zueinander gemäß einer Achse senkrecht zur Achse des langgestreckten Körpers bis ihre Enden sich berühren, um eine den langgestreckten Körper umgebende Krone zu bilden, wobei die Vorrichtung außerdem ein Mittel zum vorläufigen Verriegeln aufweist, das umfasst:
- eine feststehende Klaue (43), die mit mindestens zwei Backen (44, 45) versehen ist, die untereinander einen stumpfen Winkel bilden,
- einen Träger (42) einer beweglichen Klaue (41), der mindestens eine Führung (46, 48, 49) für die bewegliche Klaue aufweist, wobei jede genannte Führung eine Verschiebung der beweglichen Klaue parallel zur feststehenden Klaue führt,
- die bewegliche Klaue und
- ein Mittel zum Verschieben der beweglichen Klaue, die von einer Führung des Trägers abgestützt wird, zur feststehenden Klaue.

2. Vorrichtung nach Anspruch 1, die an mindestens einer der Halbkronen (31, 32) mindestens einen Zentrierstift (34) aufweist, der in der anderen Halbkrone einer Öffnung (33) in komplementärer Form zur Form des Zentrierstiftes entspricht.

3. Vorrichtung nach einem beliebigen der vorhergehenden Ansprüche, bei dem der Träger (42) der beweglichen Klaue eine Mehrzahl von Führungen (46, 48, 49) für die bewegliche Klaue aufweist, wobei die Führungen in unterschiedlichen Abständen von der feststehenden Klaue angeordnet sind.

4. Vorrichtung nach einem beliebigen der vorhergehenden Ansprüche, die umfasst:
- ein Mittel (23) zum Antreiben einer Spule (71, 135) mit einem vorimprägnierten polymerisierbaren Band (202) zur Drehung um den langgestreckten Körper (35, 100),
- ein Mittel (54) zum Antreiben der Spule in Längsrichtung parallel zur Achse des langgestreckten Körpers und
- ein Verbindungsmittel (55) zwischen den Antriebsmitteln, das ausgebildet ist, eine Schraube gegenüber der Außenfläche des langgestreckten Körpers zum Werkzeug laufen zu lassen.

5. Vorrichtung nach Anspruch 4, bei dem das Verbindungsmittel (55) umfasst:
- zwei in Bezug auf die zwei Halbkronen feststehende gezahnte Halbräder, in die ein bewegliches gezahntes Rad (53) eingreift, das mit einer Schnecke (55) verbunden ist, wobei die Achse des gezahnten beweglichen Rades zur Drehung um den langgestreckten Körper (35, 100) durch das Mittel zum Antreiben zur Drehung angetrieben wird, und
- einen Träger (52, 165) der Spule, der parallel zur Achse des langgestreckten Körpers durch die Drehung der Schnecke verschoben wird.

6. Vorrichtungsheim beliebigen der Ansprüche 4 oder 5, bei der das Mittel zum Antreiben zur Drehung manuell ist.

7. Vorrichtung nach einem beliebigen der Ansprüche 4 bis 6, bei dem das Verbindungsmittel (55) ein Mittel (61, 62, 63, 64) zum Umkehren der Richtung der Längsbewegung aufweist, das betätigt wird, wenn das Werkzeug am Ende der Längsbewegung ankommt.

8. Vorrichtung nach Anspruch 7, bei der das Mittel (61, 62, 63, 64) zum Umkehren ein Doppel-Antriebskegelrad aufweist, von dem ein gezahntes Rad, genannt Eintrittsrad, in Längsrichtung frei ist, um alternativ mit dem einen oder dem anderen der anderen gezahnten Räder in Eingriff zu treten, wobei die Längsbewegung des gezahnten Eintrittsrades von einem Anschlag des Endes der Längsbewegung hervorgerufen wird.

9. Vorrichtung nach einem beliebigen der Ansprüche 4 bis 8, bei dem die Spule (71, 135) in Bezug auf eine Achse senkrecht zum Materialband (202) und zur Achse des langgestreckten Körpers (35, 100) drehfrei ist.

10. Vorrichtung nach einem der Ansprüche 4 bis 9, die ein Mittel (103, 204) zur Erfassung des Endes des Bands (202) auf der Spule (71, 135) aufweist.

11. Vorrichtung nach einem beliebigen der vorhergehenden Ansprüche, die ein Gegengewicht (73) aufweist, das derart ausgebildet ist, dass der Schwerpunkt der Vorrichtung im Wesentlichen auf der Achse des langgestreckten Körpers (35, 100) liegt.

12. Vorrichtung nach einem beliebigen der vorhergehenden Ansprüche, die mindestens einen Schwimmer von geringerer Dichte als die Dichte des Wassers aufweist.

## Claims

1. A device for the local repair or strengthening of an elongate body (35, 100) exhibiting a change in its integrity, said device being intended to wind one or more layers of tape (71, 135, 202) around the elongate body, said device comprising :
- two half rings (31, 32) each having two ends configured to come into contact with one another,
- means for moving the two half rings relative to one another until they surround the elongate body, without touching one another, and
- means for translating the two half rings relative to one another along an axis perpendicular to the axis of the elongate body until the ends of the half rings are in contact to form a ring surrounding the elongate body, the device further including a preliminary blocking means including:
- a stationary jaw (43) provided with at least two pads (44, 45) forming an obtuse angle relative to one another,
- a removable jaw (41) support (42) including at least one guide (46, 48, 49) for the removable jaw, each said guide guiding a movement of the removable jaw parallel to the stationary jaw,
- the removable jaw, and
- a means for moving the removable jaw supported by a guide of the support toward the stationary jaw.

2. The device according to claim 1, which includes, on at least one of the half rings (31, 32), at least one centering pin (34) corresponding, in the other half ring, to an opening (33) with a shape complementary to the shape of said centering pin.

3. The device according to any one of the preceding claims, wherein the removable jaw support (42) includes a plurality of guides (46, 48, 49) for the removable jaw, said guides being at different distances from the stationary jaw.

4. The device according to any one of the preceding claims, which includes:
- a means (23) for rotating a spool (71, 135) of preimpregnated polymerizable tape (202) around the elongate body (35, 100),
- a means (54) for translating the spool parallel to the axis of the elongate body, and
- a connecting means (55) between the driving means configured to cause the tool to travel in a spiral facing the outer surface of the elongate body.

5. The device according to claim 4, wherein the connecting means (55) includes:
- two toothed half wheels (51) stationary relative to the two half rings on which a moving gear (53) secured to a worm screw (55) meshes, the axis of the moving gear being rotated around the elongate body (35, 100) by the rotational driving means, and
- a spool support (52, 165) moved parallel to the axis of the elongate body by the rotation of the worm screw.

6. The device according to any one of claims 4 or 5, wherein the rotational driving means is manual.

7. The device according to any one of claims 4 to 6, wherein the connecting means (55) includes a means (61, 62, 63, 64) for reversing the translation direction actuated when the tool arrives at the end of its longitudinal travel.

8. The device according to claim 7, wherein the reversal means (61, 62, 63, 64) includes a double conical pinion, whereof a gear, called input gear, is freely translating to mesh alternately on one or the other of the other gears, the translation of the input gear being caused by a longitudinal end-of-travel stop.

9. The device according to any one of claims 4 to 8, wherein the spool (71, 135) rotates freely relative to an axis perpendicular to the material tape (202) and to the axis of the elongate body (35, 100).

10. The device according to one of claims 4 to 9, which includes a means (203, 204) for detecting the end of the tape (202) on the spool (71, 135).

11. The device according to any one of the preceding claims, which includes a counterweight (73) configured so that the center of gravity of the device is substantially on the axis of the elongate body (35, 100).

12. The device according to any one of the preceding claims, which includes at least one float with a density lower than the density of water.
